# NEW EUROPEAN PATENT SPECIFICATION

(11) **EP 0 564 596 B2**
(45) Date of publication and mention of the opposition decision: **14.03.2001**
(45) Mention of the grant of the patent: 28.02.1996
(21) Application number: 92904128.3
(22) Date of filing: 26.12.1991
(51) Int. Cl.: C09J 123/16

(54) **HOT MELT ADHESIVE COMPOSITION**
HEISSSCHMELZKLEBEZUSAMMENSETZUNG
COMPOSITION D'ADHESIF THERMOFUSIBLE

(30) Priority: 27.12.1990 US 634986
(43) Date of publication of application: 13.10.1993
(73) Proprietor: EXXON CHEMICAL PATENTS INC., Linden, New Jersey 07036-0710 (US)
(72) Inventor: TSE, Mun, Fu, Seabrook, TX 77586 (US); HUGHES, Vincent, Leo, Humble, TX 77346 (US); MEHTA, Aspy, Keki, Humble, TX 77346 (US); MILKS, Robert, Ramsey, Baton Rouge, LA 70802 (US)
(74) Representative: Dörries, Hans Ulrich, Dr.
(86) International application number: US9109678
(87) International publication number: WO9212212

(56) References cited:
- EP-A- 0 115 434
- EP-A- 0 208 075
- EP-A- 0 319 043
- US-A- 4 471 086
- US-A- 4 761 450
- US-A- 4 808 561

## Description

### 1. Field of the Invention

This invention relates to hot melt adhesives based on elastomeric ethylene copolymers. In particular, the invention relates to hot melt adhesives especially comprising ethylene/alpha-olefin copolymers wherein the alpha-olefin can have from 3-20 carbon atoms such as ethylene/butene-1, ethylene/hexene-1, ethylene/octene-1, and ethylene/propylene copolymers. These ethylene copolymers with prescribed range of comonomer levels are prepared by polymerization of the suitable olefins in the presence of supported or unsupported metallocene catalyst and cocatalyst.

### 2. Description of the Prior Art

Hot melt adhesives are mixtures of polymer and adjuvants, usually tackifying resin, wax, or low Tg materials such as oils and low molecular weight polymers. The polymer contributes cohesive strength to the final formulation. It is well known that highly crystalline polymers show very poor adhesive performance at temperatures below room temperature due to brittleness, hence, somewhat elastic polymers are most useful in hot melt adhesives. In addition, the presence of the comonomer improves adhesion of the final hot melt adhesive formulation to metal and polar substrates such as aluminum and glass.

Copolymers of ethylene and a monoolefinically unsaturated polar comonomer such as vinyl acetate, methyl acrylate, acrylic acid and the like, have been reported as useful polymers to formulate into hot melt adhesives. These hot melt adhesives generally are lacking in elevated temperature performance. These hot melt adhesives, although useful with polar substrates, are less useful with non-polar substrates.

Hot melt adhesives prepared with EVA (ethylene/vinyl acetate copolymer) containing high levels of vinyl acetate are generally ineffective in laminating non-polar plastic surfaces to the same plastic surfaces or to other surfaces. For example, polypropylene is widely used for product assembly in the automobile industry due to low cost and solvent resistance. The polypropylene parts need a hot melt adhesive to bond to other polymer parts or bond to other substrates such as steel, aluminium, glass, etc. Besides excellent adhesion, another highly desirable requirement of the hot melt composition is its elevated temperature properties. Besides product assemble applications, polypropylene is widely used in film and in cast sheet form for packaging articles and for packaging food and such packaging requires closure which can resist mechanical breakage.

EP-A-115434 discloses a hot melt adhesive composition comprising (a) a copolymer of ethylene and from 2 to 20 weight percent of at least one aliphatic α-olefin having from 3 to 10 carbon atoms, the copolymer having a molecular weight of from 1,000 to 40,000 and (b) a tackifier which may be a resin, resin ester, resin derivative or a hydrogenated derivative thereof. Only ethylene/propylene copolymers are exemplified.

EP-A-319043 discloses a hot melt adhesive composition comprising a copolymer of ethylene and at least one α-olefin comonomer having 3 to 8 carbon atoms, a tackifier, liquid polybutene and a synthetic wax. The tackifier of the composition is a resin ester.

U.S. Patent 4,072,735 discloses the preparation of a hot melt pressure sensitive adhesive which comprises ethylene-propylene rubber, tackifying resin, polybutene, and, optionally, a crystalline polypropylene. The addition of the crystalline polypropylene is required in order to obtain a useful adhesive at elevated temperatures.

U.S. Patent 4,568,713 discloses a hot melt adhesive system comprising butene-1/ethylene copolymer (containing 5.5-10.0 wt. % ethylene), an aliphatic/non-polar tackifier, an antioxidizing agent and, optionally, microcrystalline wax. The patent discloses utility for long open time and the need for good cold metal bonding to steel and aluminium.

JP-62-129303 discloses the preparation of ethylene/alpha-olefin copolymers using metallocene-alumoxane catalysts. While the products obtained are olefin copolymers having narrow molecular weight distributions and relatively low softening points, these copolymers are waxes characterized by only slight surface stickiness or slight adhesiveness, and are therefore use as pigment dispersing agents and toners.

JP-61-236804 discloses preparing narrow molecular weight distribution ethylene/alpha-olefin copolymers with metallocene-alumoxane catalysts, however, these ethylene/alpha-olefin copolymer products are also waxes that are used as pigment dispersants and resin processing aids. No adhesive characteristics are taught for these products.

JP-62-121709 pertains to the copolymerization of ethylene with an alpha-olefin in the presence of a catalyst comprising a zirconium hydride compound such as a bis(cyclopentadienyl) zirconium monochlorohydride and an alumoxane to obtain a copolymer which is narrow in both molecular weight distribution and composition distribution. However, while the copolymer is excellent in transparency, impact resistance and heat sealability, it is also characterized by surface non-stickiness.

There is an apparent need in the art to obtain hot melt adhesives having improved elevated temperature properties, and better low temperature flexibility. There is also a need in the art for low viscosity hot melt adhesives. A hot melt adhesive with a low viscosity does not create blockages in the hot melt applicator, unlike high viscosity hot melt adhesives (HMAs). This results in less down time for cleaning and unplugging for the hot melt applicator. A lower viscosity HMA will also have better flow at hot melt application temperature.

### SUMMARY OF THE INVENTION

It is an objective of this invention to provide lower cost hot melt adhesives based on ethylene copolymers which provide good adhesive performance on plastic surfaces, in particular polypropylene and polyethylene surfaces It is another objective of this invention to provide a hot melt adhesive which does not need the addition of an elastomer to modify final performance such as high temperature resistance and adhesion on non-polar surfaces It is yet another objective of this invention to provide an improved hot melt adhesive with a low viscosity

According to the present invention there is provided a hot melt adhesive composition comprising a copolymer component (a) and a tackifier component (b) wherein
(a) comprises a copolymer of ethylene and from 6 to 30 weight percent (based on the total weight of ethylene and comonomer) of an alpha-olefin comonomer having from 4 to 20 carbon atoms, which copolymer has a weight average molecular weight (Mw) of from 2,000 to 100,000, and where the ethylene copolymer is the polymer product formed by copolymerizing ethylene and the alpha olefin in the presence of a metallocene catalyst and a cocatalyst; and
(b) comprises a tackifier selected from aliphatic resins, polyterpene resins, hydrogenated cyclic resins and mixed aliphatic-aromatic resins, with softening point ranging from 70 to 130°C and optionally includes an isobutylene-based liquid copolymer.

Such hot melt adhesive compositions based on ethylene copolymers generally provide good adhesive performance Such hot melt adhesive compositions based on ethylene copolymers generally provide good adhesive performance on plastic surfaces, in particular, surfaces comprising polypropylene and polyethylene; and also generally do not need the addition of an elastomer to modify final performance such as increased high temperature resistance and improved adhesion on non-polar surfaces. The specified ethylene/alpha-olefin copolymers having certain molecular weight ranges and certain comonomer level ranges can be utilized in formulating the adhesive composition absent an elastomeric resin, in particular, when the copolymers have been prepared in the presence of a catalyst system comprising a Group IVB transition metal - cyclopentadienyl moiety such as, for example, a supported or unsupported metallocene and appropriate cocatalyst, for example an alumoxane.

These hot melt adhesive formulations comprise at least one of the specified copolymers, tackifier(s) and optionally, wax or oil. It has been further discovered that an improvement in adhesion performance and a reduction in viscosity of the hot melt can be accomplished by further including an isobutylene based, e.g. isobutylene/butene-1, liquid copolymer, especially, the formulation Parapol 950. Thus the tackifier component (b) may optionally include isobutylene/butene-1 copolymer. In the hot melt adhesive formulation of this invention, the weight average molecular weight (Mw) values of the copolymer will range from about 20,000 to about 100,000, preferably from 30,000 to 80,000, and the comonomer level will range from about 6 wt.% to about 30 wt.%, preferably from 10 wt.% to 20 wt.%, and the isobutylene based, e.g. isobutylene/butene-1 liquid copolymer, if present, preferably comprises from 10% to 40% by weight of the total formulation. Total tackifier can be present in about 70 to 30% by weight of total formulation. If the isobutylene copolymer is included the copolymer is included in the total tackifier amount. The range of isobutylene copolymer in the tackifier component can be for example from 10 to 90% by weight.

The ethylene-co-alpha-olefin polymers of the present invention can be produced in accordance with any known polymerization process, including a slurry polylmerization, gas phase polymerization, and high pressure polymerization process.

Replacing a percentage of the tackifier with an isobutylene based liquid copolymer, preferably an isobutylene/butene-1 copolymer, more preferably Parapol 950, which is an isobutylene/butene-1 copolymer made and sold commercially by Exxon, leads to a desirable reduction in viscosity.

A slurry polymerization process generally uses super-atmospheric pressures and temperatures in the range of 40-110°C. In a slurry polymerization, a suspension of solid, particulate polymer is formed in a liquid polymerization medium to which ethylene and comonomers and often hydrogen along with catalyst are added. The liquid employed in the polymerization medium can be an alkane, cycloalkane, or an aromatic hydrocarbon such as toluene, ethylbenzene or xylene. The medium employed should be liquid under the conditions of polymerization and relatively inert. Preferably, hexane or toluene is employed.

In modification, the polymer components of the present invention may be formed by gas-phase polymerization. A gas-phase process utilized super-atmospheric pressure and temperatures in the range of about 50°-120°C. Gas phase polymerization can be performed in a stirred or fluidized bed of catalyst and product particles in a pressure vessel adapted to permit the separation of product particles from unreacted gases Thermostated ethylene, comonomer, hydrogen and an inert diluent gas such as nitrogen can be introduced or recirculated so as to maintain the particles at a temperature of 50°-120°C Triethylaluminum may be added as needed as a scavenger of water, oxygen, and other adventitious impurities. Polymer product can be withdrawn continuously or semicontinuously at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal.

The polyethylene copolymer component of the present invention can also be produced in accordance with a high pressure process by polymerizing ethylene in combination with other monomers such as butene-1, hexene-1, octene-1, or 4-methylpentene-1 in the presence of the catalyst system comprising a cyclopentadienyl-transition metal compound and an alumoxane compound. As indicated more fully hereinafter, it is important, in the high-pressure process, that the polymerization temperature be above about 120°C but below the decomposition temperature of said product and that the polymerization pressure be above about 500 bar (kg/cm²). In those situations wherein the molecular weight of the polymer product that would be produced at a given set of operating conditions is higher than desired, any of the techniques known in the art for control of molecular weight, such as the use of hydrogen or reactor temperature, may be used in the process of this invention. As an improvement upon these copolymers, this invention blends the copolymers with, inter alia, isobutylene based liquid polymers such as Parapol 950 and the like to obtain greater substrate adhesion, and a lower viscosity hot melt adhesive formulation.

### DETAILED DESCRIPTION OF THE INVETION

The ethylene copolymer(s) adhesive formulations of this invention comprise copolymers prepared in the presence of Group IVB (66th Edition of Handbook of Chemistry and Physics, CRC Press, 1985-1986, CAS version) transition metal, cyclopentadienyl containing catalysts. The copolymers are ethylene/alpha-olefin copolymers wherein the alpha-olefin can have from 4 to 20 carbon atoms. Illustrative of the alpha-olefins are butene-1, hexene-1, and octene-1. The copolymers can also include a minor amount of -nonconjugated diene such as 1,4-hexadiene; 4-methyl-1,4-hexadiene, 5-methyl-1;4-hexadiene, alpha and omega-diene such as 1,4-pentadiene, 1,5-hexadiene, and norbornene derivative such as 5-ethylidene-2-norborene, dicyclopentadiene typically up to 2 mole percent.

Illustrative of the Group IVB transition metal-cyclopentadienyl containing catalysts are the supported or unsupported metallocene-alumoxane catalysts. These catalysts and the methods of preparing the same are well known, as shown in U.S. Patent 4,808,561, EP-A-129,368. These catalysts may comprise at least one metallocene of Group IVB of the Periodic Table and a cocatalyst such as an alumoxane and in the supported case a support material such as silica to provide a supported metallocene-cocatalyst, e.g., alumoxane reaction product.

Alumoxanes are well known in the art and comprise oligomeric linear and/or cyclic alkyl alumoxanes represented by the formula: 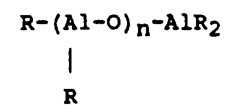 for oligomeric, linear alumoxanes and 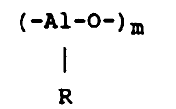 for oligomeric, cyclic alumoxane wherein n is 1-40, preferably 10-20, m is 3-40, preferably 3-20 and R is a C₁-C₈ alkyl group and preferably methyl.

The supported reaction product will polymerize ethylene and one of the aforementioned alpha-olefins at commercially acceptable rates without the presence of the objectionable excess of alumoxane as required in the homogeneous system.

The copolymer components may be produced, for example, by the process disclosed in EP-A 87903988.1 and 37308359.6. These disclose a process for polymerizing ethylene, either alone or in combination with other monomers such as alpha-olefins, with a homogeneous compound and an alumoxane compound at elevated temperatures and pressures. The ratio of aluminum in the alumoxane to the total metal in the metallocene is in the range of 1000:1 to 0.5:1.

The hot melt adhesive composition may be used, for example, as an adhesive layer in a metallic or polymeric laminate by conventional laminating techniques, such as, for example, coextrusion, extrusion coating, and the like. In a preferred embodiment, the composition is applied to the substrate as a hot melt adhesive containing the polymer, isobutylene copolymer and a compatible solid tackifier, and optionally a compatible liquid tackifier and a wax. The solid tackifiers preferably have a softening point of from 70° to 130°C, more preferably from 80° to 120°C; a preferred number average molecular weight of from 500 to 1300, more preferably from 700 to 1300; a preferred weight average molecular weight of from 1000 to 3000, more preferably from 1200 to 2500; and a preferred specific gravity of from 0.80 to 1.30. As suitable tackifier there may be mentioned, aliphatic resins, polyterpene resins, hydrogenated resins and mixed aliphatic-aromatic resins well known in the art. Exemplary aliphatic resins include those available under the trade designations Escorez, Piccotac, Hercures, Wingtack, Hi-Rez, Quintone, Tackirol, etc. Exemplary polyterpene resins include those available under the trade designations Nirez, Piccolyte, Wingtack, Zonarez, etc. Exemplary hydrogenated resins include those available under the trade designations Escorez, Arkon, Clearon, etc. Exemplary mixed aliphatic-aromatic resins include those available under the trade designations Escorez, Regalite, Hercures, AR, Imprez, Norsolene M, Marukarez, Arkon M, Quintone, etc. Other tackifiers may also be employed, provided they are compatible with the ethylene copolymers. The liquid tackifier chosen is compatible with the solid tackifier used in the formulation. These liquid tackifiers typically have a softening point of from 10° to 40°C and a weight average molecular weight of from 300 to 600. Depending on the nature and amount of the solid tackifiers and isobutylene based liquid polymers (if any) used, liquid tackifier may comprise, for example, from zero to 20 weight percent of the adhesive composition.

Preferably, the hot melt adhesive (HMA) composition comprises a copolymer, solid tackifier and optionally a isobutylene/butene-1 based liquid copolymer, more preferably the HMA comprises the copolymer, a solid tackifier and optionally Parapol 950. Also, a desirable HMA can comprise the copolymer, Parapol 950, and optionally one or the other of the solid and liquid tackifiers. More preferably the hot melt adhesive composition comprises the copolymer, Escorez 1310LC which is a purely aliphatic solid tackifier with a Mw of 1,000 and a Tg of 40°C, and Parapol 950. Parapol 950 is a liquid isobutylene/butene-1 copolymer having a a molecular weight in the range of about 900 to about 1000. Parapol 950 imparts greater strength in bonding and lower viscosity in the HMA composition. Parapol 950 may comprise from about 10 wt.% to about 40 wt.% of the adhesive composition, more preferably 10 to 20 wt.% of the composition.

The weight ratio of total tackifier to ethylene copolymer may be, for example, from about 70:30 to 30:70, and preferably from 60:40 to 40:60 with the isobutylene copolymer being considered part of the tackifier portion. The liquid isobutylene copolymer, e.g., isobutylene/butene-1 copolymer, to tackifier ratio is preferably between 10 to 90% by weight and more preferably is between 30 to 60% by weight.

Paraffinic wax or microcrystalline wax is desirably used in the hot melt adhesive composition when low melt viscosity is desired. Depending on the nature and amount of the tackifier and Parapol 950 used, wax may comprise from zero to 30 weight percent of the adhesive composition. The hot melt composition may also include conventional additives such as pigments, fillers, antioxidants, stabilizers, and the like, in conventional amounts, but the hot melt is preferably essentially free of solvents. Antioxidants such as Irganox 1010, when used, are typically present at 0.5 to 1.0 weight percent of the hot melt adhesive composition.

The hot melt adhesive may be prepared by conventionally melt blending the components together at elevated temperature (from about 150° to about 200°C) under an inert gas blanket until a homogeneous mix is obtained. Any mixing method producing homogeneous blend without degrading the hot melt components is satisfactory, One well known method to the art of blending materials of this type is to carry out the hot melt blending in a heated vessel equipped with a stirrer. The molten adhesive was then poured onto a silicone coated release paper and smoothed to a thickness of about 0.15 mm (6 mils) by drawing a heated bar across the adhesive layer. The adhesive film, after being cooled down and peeled off from the release paper, was used for subsequent adhesive tests.

The hot melt adhesive, in addition to having enhanced adhesion to various substrates such as, inter alia, aluminum, polyethylene, polypropylene, polyvinylchloride, polycarbonate and varnish, has the further advantage that the hot melt composition has good elevated temperature properties such as SAFT and PAFT, and has a lower viscosity when compared to commercial EVA hot melt compositions.

### TESTING METHODS

1. Compatibility - The cloud point is the temperature at which the clear and molten adhesive composition cools to give the first indication of a cloud or haze. It provides a measure of compatibility of tackifier in a hot melt adhesive compound.
2. T-Peel Strength - T-Peel strength is defined as the average load per unit width of bond line required to produce progressive separation of 2 bonded adherends. Separation speed is 50.8 mm (2 inches)/minute.
3. Shear Adhesion Failure Temperature (SAFT) -25 mm x 25 mm (One inch x one inch) lap shear bonds to Kraft paper are prepared. Samples are hung vertically in an air circulating oven at 30°C and a 500 gram weight is suspended from the bottom strip. The oven temperature is raised 5.5 °C (10°F) every 15 minutes. The shear-fail temperature is the average of three readings.
4. Peel Adhesion Failure Temperature (PAFT) - 25 x 75 mm (One inch x three inch) adhesive bonds to Kraft paper are prepared. Samples are hung horizontally (in peel mode) in an air circulating oven and a 100 gram weight is suspended from the free end of the bond. The oven temperature is raised 5.5°C (10°F) every 15 minutes. The peel-fail temperature is the average of three readings.
5. Polymer Melt Index - Melt Index (abbreviated MI) was measured according to ASTM Dt1238, condition E, 190°C, and 2,16 kg. These are typical conditions used for polyethylenes and EVA polymers.
6. Crystalline Melting Point (abbreviated Tm) - Tm was determined by Differential Scanning Calorimetry (abbreviated DSC). Heating and cooling rates were 10°C/minute. Tm is the temperature at which a maximum occurs in the heat absorption curve.

The invention is illustrated by way of the following examples.

### Example 1 and 2

The catalyst for polymerizing the ethylene copolymers was prepared as follows. An 800 gram quantity of silica gel and a 2700 ml aliquot of methylalumoxane/toluene solution (10%) were placed in a two-gallon reactor and allowed to react at ambient temperature for one hour. A 21.6 gram quantity of bis(indenyl)zirconium dichloride slurried in 300 ml of toluene was added into the reactor and the mixture was allowed to react at 65°C for 30 minutes. The reactor was then heated at 75°C while nitrogen gas was purged through the reactor to remove the solvent. The heating and nitrogen purging were stopped when the mixture in the reactor tumed into a free-flowing powder.

The polymerization was conducted in 1 40-6 cm (16-inch) diameter fluidized bed gas-phase reactor. Ethylene, butene-1, and nitrogen were fed continuously into the reactor to maintain a constant production rate. Product was periodically removed from the reactor to maintain the desired bed weight. The polymerization conditons are shown in Table I.

**Table I**

| Gas Phase Polymerization | |
|---|---|
| Temperature (°C) | 61.6 (143°F) |
| Total Pressure (bar) | 20.7 (300 psia) |
| Gas Velocity cm/sec | 45.7 (1.5 ft/sec) |
| Catalyst Feed Rate (g/hr) | 11 |
| Production Rate (kg/hr) | 13.2 (29 Ib/hr) |

The polymerized product has a number average molecular weight (Mₙ) of 20,000, a weight average molecular weight (M_{w}) of 50,000, and hence a ratio of M_{w} to Mₙ of 2.50. The polymer had values of Ml and Tm of 24 and 79°C, respectively. The polymer had a viscoelastic loss peak as determined on a Rheometrics System IV Spectrometer at -46°C. Butene-1 weight percent in the polymer was 16 and specific gravity of the polymer is 0,898. Hot melt adhesive performance of compositions based on this ethylene copolymer was compared to compositions based on an EVA copolymer, Escorez UL 7750 (Table II). This EVA polymer had an Mₙ of 19,000, and M_{w} of 41,000, and hence an M_{W}/Mₙ ratio of 2.16. This EVA polymer had values of Ml and Tm of 32 and 69° C, respectively. This polymer had a viscoelastic loss peak at -29° C. Vinyl acetate weight percent in the polymer is 28 and specific gravity of the polymer is 0.934. Escorez 2393 is a mixed aliphatic-aromatic resin, Foral 105 is a rosin ester. Escorez 5380 and Escorez 5300 are hydrogenated cyclic solid resins. Resin A is a hydrogenated cyclic liquid hydrocarbon resin which has a softening point of 37°C, a M_{w} of 340, M_{w}/Mₙ = 3.3, and Tg = -13°C. Aristowax 165 is a paraffinic wax With Tm of 68°C.

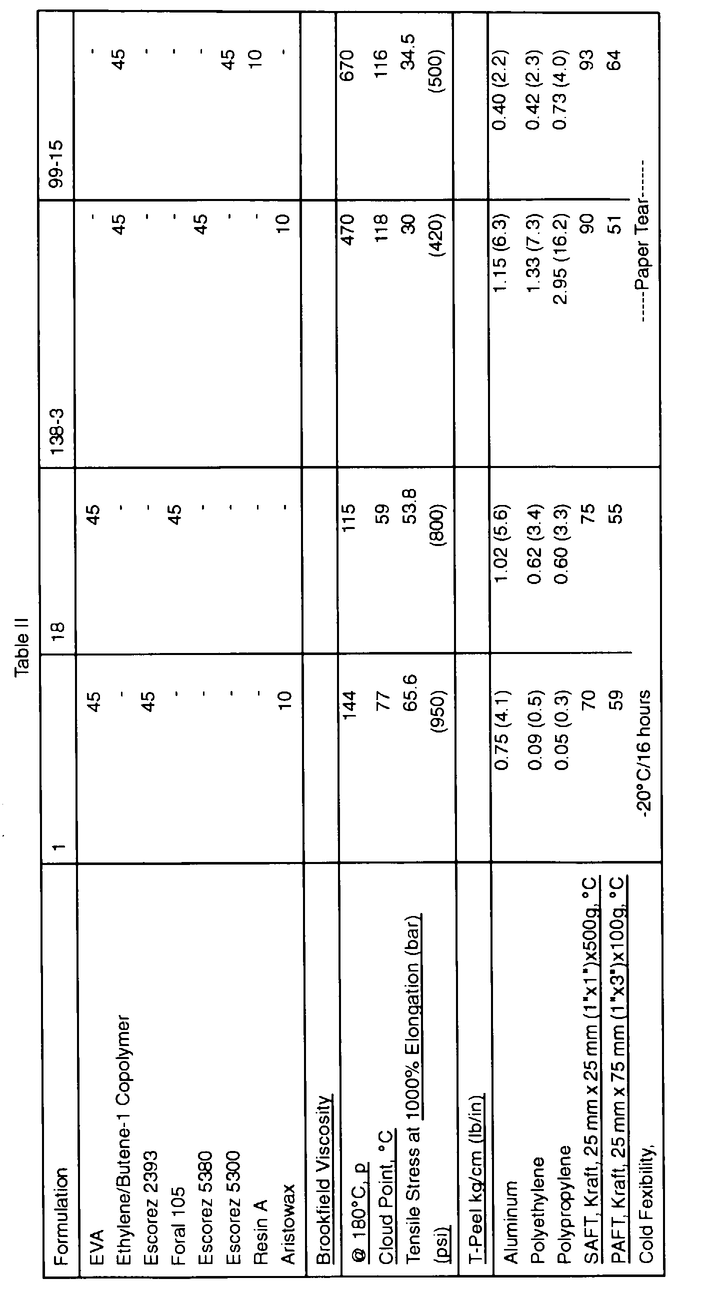

All hot melts contained 0.5 weight percent of Irganox 1010 based on total adhesive blend weight. It was surprisingly found that hot melts based on the ethylene/butene-1 copolymer showed good peel strength with metallic and polyolefin substrates, and high SAFT and PAFT values. The bonding conditions for T-Peel specimens were 177°C/40 psi/2 seconds for aluminum substrates, and 149°C/40 psi/2 seconds for both the polyethylene and polypropylene substrates. All these substrates were untreated.

### Examples 3 and 4

The identical ethylene/butene-1 copolymer was used to prepare two hot melt compositions based on aliphatic resins Escorez 1310LC and hydrogenated aliphatic resins Resins B and C (Table III). Resin B is a solid hydrogenated aliphatic resin. Resin C is a liquid hydrogenated aliphatic resin. The softening points of Resins B and C are 70°C and 24°C, respectively, the M_{w} = 1,400 and 460, respectively, M_{w}/Mₙ = 1.5 and 1.4, respectively, and Tg = 25 and - 26°C, respectively. The results are summarized in Table III.

**Table III**

| | | |
|---|---|---|
| Formulation | 99-8 | 99-9 |
| Ethylene/Butene-1 Copolymer | 45 | 45 |
| Escorez 1310LC | - | 30 |
| Resin B | 40 | - |
| Resin C | 15 | 25 |
| Brookfield Viscosity @ 180 °C, p | 420 | 460 |
| Cloud Point, °C | 117 | 112 |
| Tensile Stress at 1000% Elongation, bar | 13.8 (200) | 13.8 (200) |
| (psi) | | |
| T-Peel, kg/cm (Ib/in) | | |
| Aluminum | 0.33(1.8) | 2.17(11.9) |
| Polyethylene | 0.31 (1.7) | 0.16 (0.9) |
| Polypropylene | 2.42 (13.3) | 2.31 (12.7) |
| SAFT, Kraft, 25 mm x 25 mm (1"x1") | 92 | 89 |
| x500g, °C | | |
| PAFT, Kraft, 25 mm x 75 mm (1"x3") | 53 | 54 |
| x100g, °C | | |
| Cold Flexibility, -20°C/16 hours | ---Paper Tear-- | |

It was surprisingly found that hot melts based on the ethylene/butene-1 copolymer showed good peel strength with metallic and polyolefin substrates, especially with polypropylene, and high SAFT and PAFT values. The bonding conditions for T-Peel specimens were identical to conditions used in Examples 1 and 2. All these substrates were untreated.

### Examples 5 and 6

The procedures of Examples 1 and 2 were followed to prepare the catalyst and the ethylene copolymer except that hexene-1 was used as the alpha-olefin monomer. The polymerized product had an Mₙ of 28,000, an M_{w} of 54,000, and an M_{w}/Mₙ ratio of 1.93. The polymer had values of Ml and Tm of 14 and 96°C, respectively. The polymer had a viscoelastic loss peak as determined on a Rheometric System IV Spectrometer at -52°. Hexene-1 weight percent in the polymer was 16 and specific gravity of the polymer is 0.901. This polymer was used to prepare two hot melt compositions based on aliphatic resins Escorez 1310LC, and Resins B and C (Table IV). All hot melts contained 0.5 weight percent of Irganox 1010 based on total adhesive blend weight. It was surprisingly found that hot melts based on the ethylene/hexene-1 copolymer showed good peel strength with metallic and polyolefin substrates, and high SAFT and PAFT values. The bonding conditions for T-Peel specimens were identical to conditions used in Examples 1 and 2. All the substrates were untreated.

**Table IV**

| | | |
|---|---|---|
| Formulation | 99-10 | 99-11 |
| Ethylene/Hexene-1 Copolymer | 45 | 45 |
| Escorez 1310LC | - | 30 |
| Resin B | 40 | - |
| Resin C | 15 | 25 |
| Brookfield Viscosity @ 180°C, p | 760 | 730 |
| Cloud Point, °C | 119 | 111 |
| Tensile Stress at 1000% | | |
| Elongation, bar (psi) | 40 (580) | 41.4 (600) |
| T-Peel, kg/cm (Ib/in) | | |
| Aluminum | 1.46 (8.0) | 0.47 (2.6) |
| Polyethylene | 0.05 (0.3) | 0.10 (0.6) |
| Polypropylene | 1.62 (8.9) | 0.18 (1.0) |
| SAFT, Kraft, 1"x1"x500g, °C | 92 | 94 |
| PAFT, Kraft, 1"x3"x100g, °C | 72 | 70 |
| Cold Flexibility, -20°C/16 hours | ---Paper Tear-- | |

### Comparative Example

Two linear low density polyethylenes (abbreviated LLDPE-1 and LLDPE-2) containing at most 5.3 weight percent hexene-1 were used to prepare hot. melt adhesive compositions containing hydrogenated cyclic resins Escorez 5300, Escorez 5380, and Resin A (Table V). LLDPE-1 and LLDPE-2 had values of MI/specific gravity of 55/0.926 and 12/0.926, respectively. All hot melts contained 0.5 weight percent of Irganox 1010 based on total adhesive blend weight. The peel strength with untreated polypropylene of the LLDPE hot melts was inferior to the ethylene copolyameric hot melts in Examples 1-6. The bonding conditions for the T-Peel specimens in Table V was 150°C/218 bar (40 psi)/10 seconds.

**Table V**

| Formulation | 141-1 | 141-2 | 141-3 |
|---|---|---|---|
| LLDPE-1 | 45 | - | 40 |
| LLDPE-2 | - | 45 | - |
| Escorez 5300 | 45 | 45 | - |
| Escorez 5380 | - | - | 40 |
| Resin A | 10 | 10 | 20 |
| Viscosity* @ 180°C, p | 460 | 1800 | - |
| T-Peel, kg/cm (lb/in) | | | |
| Polypropylene | 0.07(0.4) | 0.09(0.5) | 0.09(0.5) |

| | | | |
|---|---|---|---|
| * Complex viscosity as determined on Rheometrics System IV Spectrometer. | | | |

### Example 7

Two ethylene/butene-1 copolymers made by the process in Exampes 1 and 2 were used to prepare two hot melt compositions based on Escorez 1310LC, Parapol 950 and Aristowax 165. Irganox 1010 was added as an antioxidant. The weight percent of butene-1 in the copolymers was 11 for copolymer B and 18 for copolymer C. The melt indices for copolymer B and copolymer C were 95 and 108, respectively. Copolymer B and copolymer C had Mn values of 16,000 and 12,000; Mw values of 32,000 and 31,000 and a Mw/Mn ratios of 2.00 and 2.58, respectively. They had Tm and specific gravity values of 99°C and 76° C and 0,911 and 0.894, respectively. Parapol 950 is a liquid isobutylene/butene-1 copolymer with an Mn of approximately 900 to 1000, with a Brookfield viscosity of 175°C of 20 cps and a specific gravity of 0.89. Escorez 2101 is mixed aromatic/aliphatic solid tackifier, with an Mn of 525, a specific gravity of 1.02 and a softening point of 91°C. Escorene UL 7520, an ethylene/vinyl acetate (EVA) copolymer, which has melt index of 115 and Tm 80°C, was used for comparison. The vinyl acetate weight percent in the EVA polymer was 18 and its specific gravity was 0.924. All hot melts contained 0.5 or 1.0 wt.% of Irganox 1010 based on the total weight of the adhesive blend. The bonding conditions for T-Peel specimens were 107°C, 2.8 bar (40 psi) and 1.5 seconds for aluminum and polyethylene substrates, and 150°C, 2.8 bar (40 psi) and 10 seconds for the polypropylene substrate.

The results are summarized in Table VI.

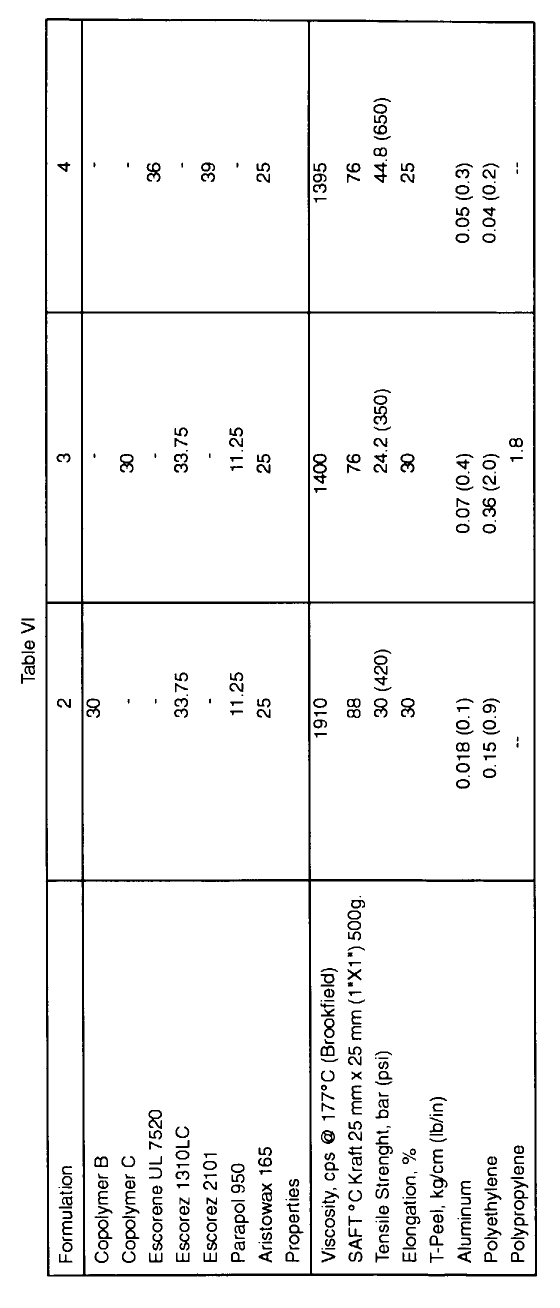

### Example 8

Copolymer C, an ethylene/butene-1 copolymer made by the process in Example 7, was used to prepare two hot melt adhesive compositions based on aliphatic resins Escorez 1310LC, Parapol 950, and Aristowax 165. Another EVA hot melt adhesive was prepared for comparison based upon Escorene UL 7520 and Escorez 5300. The butene-1 weight percent in the ethylene/butene-1 copolymer was 18. The melt index was 108, Mw was 31,000, Mn was 12,000 with a Mw/Mn ratio 2.58.

All hot melts contained 0.5 or 1.0 wt% of Irganox 1010 based on the total weight of the adhesive blend. The bonding conditions on T-Peel specimens wer identical to these shown in Example 7. The results ar summarized in Table VII. Please note that replacing part of Escorez 1310LC by Parapol 950 not only lowered the melt viscosity but also enhanced adhesion in the hot melt adhesive formulations comprising copolymer C.

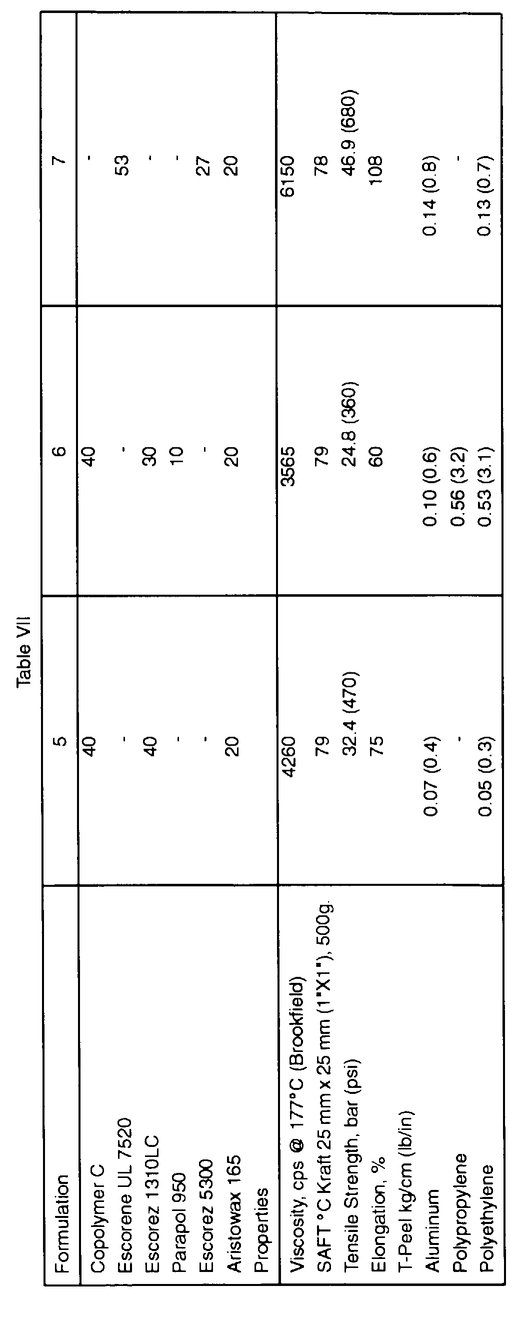

### Example 9

Copolymer B of Example 7 was used to prepare two hot melt compositions based on Escorez 1310LC, Parapol 950 and wax. The EVA copolymer of Example 7 was used as a comparison. All hot melts contained .5 or 1.0 wt.% of Irganox 1010 based upon total weight of the adhesive blend. The bonding condition for T-Peel specimens were identical to those shown in Example 7. Please note that replacing part of the Escorez 1310LC with Parapol 950 and not only lowered the melt viscosity but also enhanced adhesion in the hot melt adhesive formulation comprising copolymer B compared to the EVA formulation. Formulations 8 and 9 showed higher SAFT performance. The results are summarized in Table VIII.

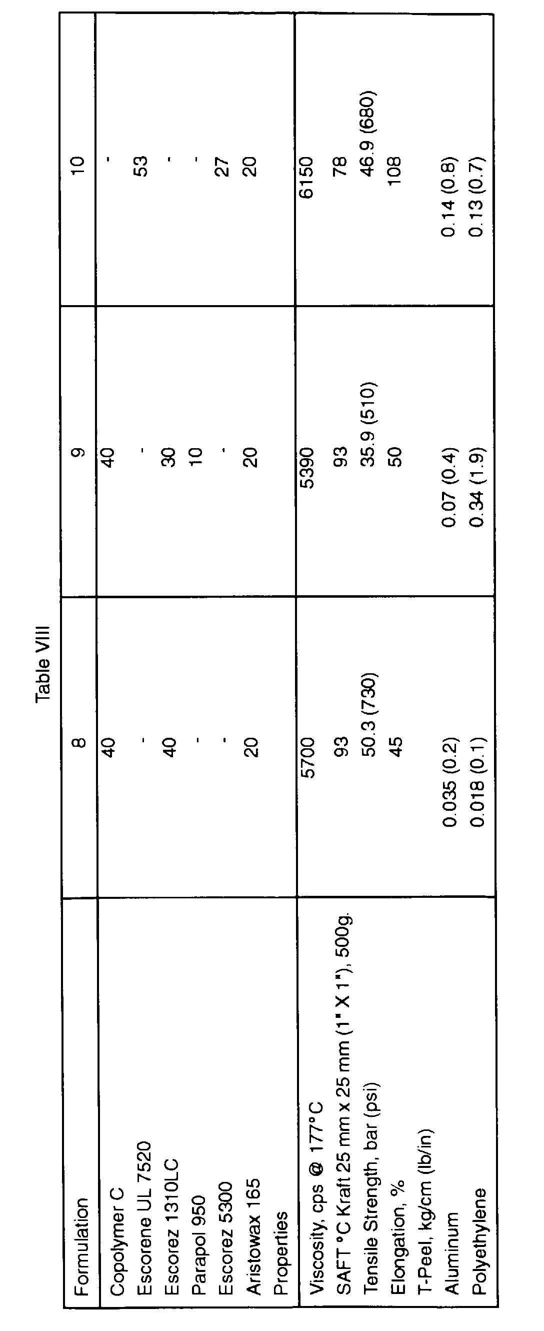

### Example 10

An ethylene/butene-1/1,4-hexadiene terpolymer made by the process in Examples 1 and 2 was used to prepare two hot melt compositions based on Escorez 1310LC, Parapol 950 and wax. The butene-1 weight percent of this terpolymer (terpolymer D) was 16.9 and the 1,4-hexadiene weight percent of this terpolymer was 3.9. The melt index was 62. The Mw was 51,000, the Mn was 25,000 with a Mw/Mn ratio of 2.04. The Tm and specific gravity values were 74°C and 0.892, respectively. Escorene UL 7750 was used for comparison.

The results are summarized in Table IX. The bonding conditions for the T-Peel specimens were identical to those shown in Example 7. All hot melt compositions contained 0.5 to 1.0 wt.% of Irganox 1010 based on the weight of the total adhesive blend. Note that replacing part of the Escorez 1310LC with Parapol 950 not only lcwered the melt viscosity but enhanced adhesion in the HMA formulations comprising terpolymer D. When compared to the EVA formulation, formulations 11 and 12 showed higher SAFT performance.

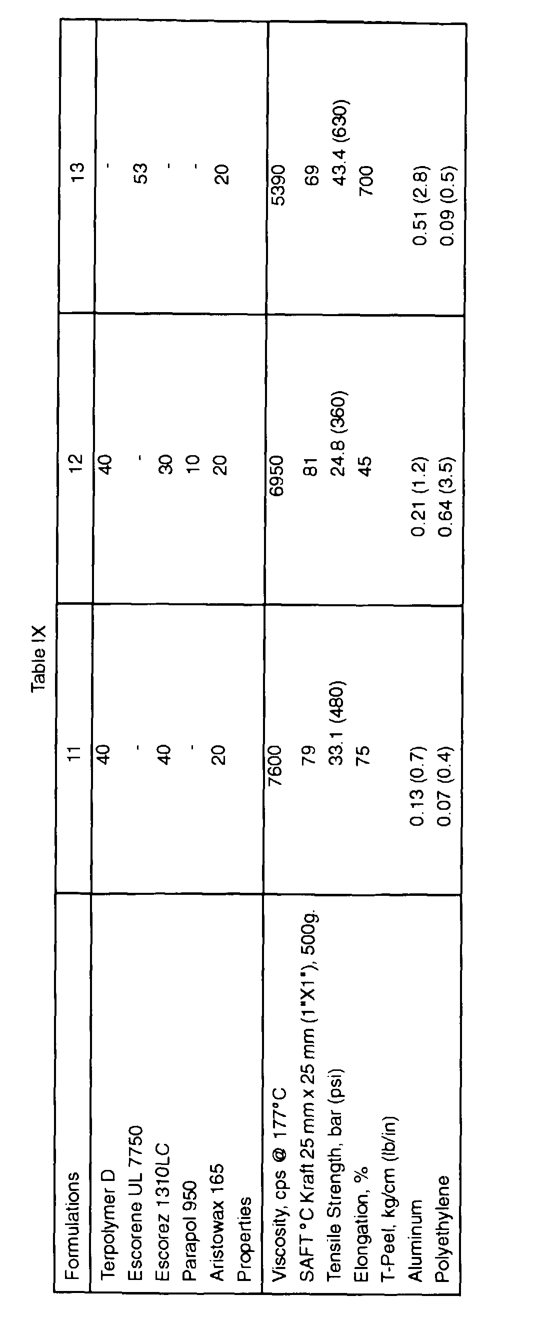

### Example 11

Terpolymer D (ethylene/butene-1/1,4-hexadiene terpolymer) of Example 10 was used to formulate three hot melt adhesive compositions based on Escorez 131 OLC, Parapol 950, Parapol 2500 and Escorez 2393 and wax Parapol 2500 is a liquid isobutylene/butene-1 copolymer with an Mn of 2500 and a specific gravity of 0.91. All HMA blends contained 0.5 or 1.0 wt.% Irganox 1010 based on the weight of the total adhesive blend. The bonding conditions for T-Peel specimens were identical to those in Example 7.

The results are summarized in Table X below. Please note that the two hot melt compositions comprising Escorez 1310LC and isobutylene-based liquid copolymer showed better adhesion with aluminum and polyethylene, especially with the lower molecular weight Parapol 950.

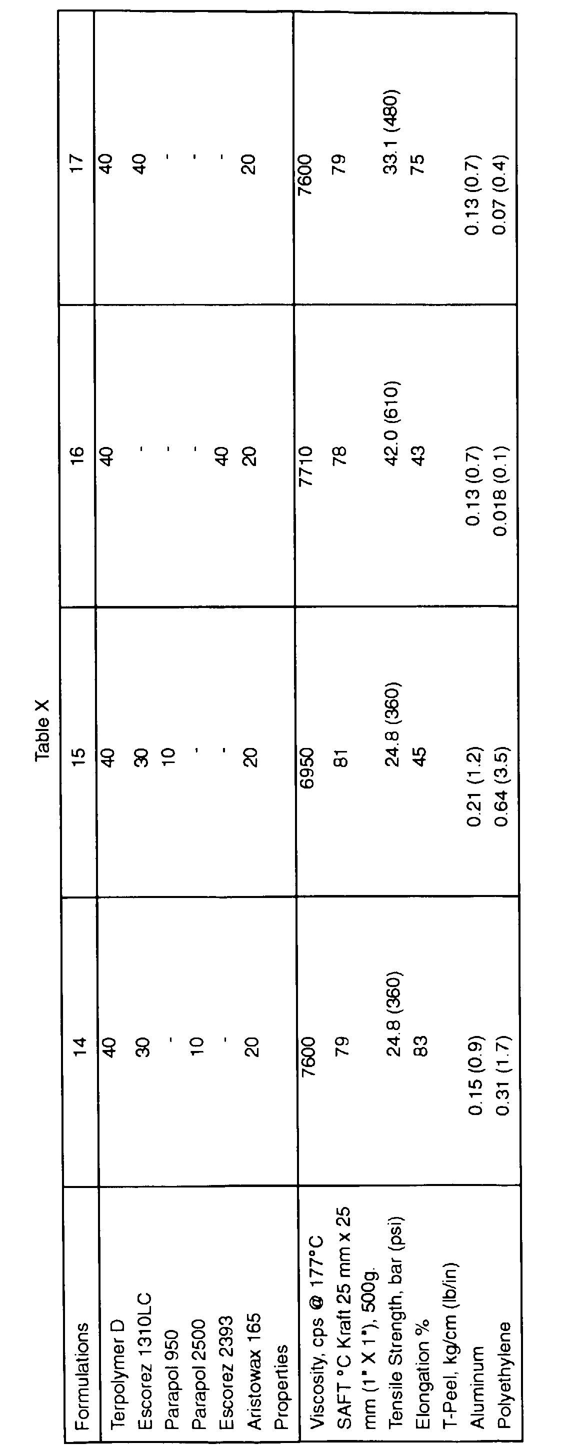

While the specific examples delineate adhesive copolymers with ethylene and the alpha-olefins of butene-1 and hexene-1, it is to be appreciated that any of the alpha-olefins having 3 or more carbon atoms are suitable in the context of the invention. Thus, propylene; pentene-1; 3-methyl pentene-1; 4-methyl pentene-1; octene-1; and the like, the mixtures thereof typify the operable comonomers within the context of the invention. Also, the foregoing examples are illustrative and explanatory of the invention, and many variations in the specific details thereof will become apparent to those skilled in the art in view thereof. It is intended that all such variations within the scope or spirit of the appended claims will be embraced thereby.

## Claims

1. A hot melt adhesive composition comprising a copolymer component (a) and a tackifier component (b) wherein:
(a) comprises a copolymer of ethylene and from 6 to 30 weight percent (based upon the weight of ethylene and comonomer) of an alpha-olefin comonomer having from 4 to 20 carbon atoms, which copolymer has a weight average molecular weight (Mw) of from 2000 to 100,000, and where the ethylene copolymer is the polymer product formed by copolymerizing ethylene and the alpha-olefin in the presence of a metallocene catalyst and a cocatalyst; and
(b) comprises a tackifier selected from aliphatic resins, polyterpene resins, hydrogenated cyclic resins and mixed aliphatic-aromatic resins with a softening point range from 70-130 °C and optionally includes an isobutylene-based liquid copolymer.

2. The composition of claim 1, wherein (b) comprises from 30-70 wt.% of the adhesive composition.

3. The composition of claim 1 or 2, wherein the ethylene copolymer has an Mw of from 30,000 to 80,000.

4. The composition of claim 1, 2 or 3, wherein the ethylene copolymer comprises from 10 to 20 weight percent of comonomer.

5. The composition of any preceding claim, wherein the alpha-olefin has from 4 to 8 carbon atoms, and is preferably hexene-1.

6. The composition of any of the above preceding claims containing an isobutylene based liquid copolymer, wherein the isobutylene based liquid copolymer comprises from 10 to 90 wt. % of (b).

7. The composition of claim 6, wherein the isobutylene based liquid copolymer is an isobutylene-butene-1 copolymer having a molecular weight of from 900-1000.

8. The composition of claims 6 or 7 which comprises from 10 to 40 wt.% of the isobutylene-based liquid copolymer.

9. The composition of any preceding claim further comprising wax with a Tm of at least 40 °C.

10. A composition according to any of the preceding claims, wherein the alpha-olefin comonomer has from 4-8 carbon atoms, which comprises from 30-70 wt.% of tackifier component (b), said component (b) comprising solid tackifier selected from aliphatic resins, polyterpene resins, hydrogenated cyclic resins and mixed aliphatic-aromatic resins with a softening point range from 70-130 °C, and from 10 to 90 wt.% of an isobutylene-butene-1 liquid copolymer of molecular weight from 900-1000.

11. The composition according to any preceding claim wherein the ethylene copolymer has a molecular weight distribution Mw/Mn of less than 3.

12. A laminated structure comprising a substrate and an optionally non-polar surface layer adhered thereto by means of a composition according to any preceding claims.

13. A composition according to claim 1 wherein the alpha-olefin comonomer has from 6-20 carbon atoms.

## Patentansprüche

1. Heißschmelzklebstoffzusammensetzung, die eine Copolymerkomponente (a) und eine Klebrigmacherkomponente (b) umfasst, in der
(a) ein Copolymer aus Ethylen und 6 bis 30 Gew. % (bezogen auf das Gewicht von Ethylen und Comonomer) eines α-Olefincomonomers mit 4 bis 20 Kohlenstoffatomen umfasst, wobei das Copolymer ein Gewichtsmittel des Molekulargewichts (M_{w}) von 2.000 bis 100.000 aufweist, und wobei das Ethylencopolymer das durch Copolymerisation von Ethylen und dem α-Olefin in Gegenwart eines Metallocenkatalysators und eines Cokatalysators gebildete Polymerprodukt ist; und
(b) einen Klebrigmacher, ausgewählt aus aliphatischen Harzen, Polyterpenharzen, hydrierten cyclischen Harzen und gemischten aliphatisch-aromatischen Harzen mit einem Erweichungspunkt im Bereich von 70 bis 130 °C umfasst und gegebenenfalls ein auf Isobutylen basierendes flüssiges Copolymer einschließt.

2. Zusammensetzung gemäß Anspruch 1, bei der (b) 30 bis 70 Gew.% der Klebstoffzusammensetzung umfasst.

3. Zusammensetzung gemäß Anspruch 1 oder 2, bei der das Ethylencopolymer ein M_{w} von 30.000 bis 80.000 aufweist.

4. Zusammensetzung gemäß Anspruch 1, 2 oder 3, bei der das Ethylencopolymer 10 bis 20 Gew.% Comonomer umfasst.

5. Zusammensetzung gemäß einem der vorstehenden Ansprüche, bei der das α-Olefin 4 bis 8 Kohlenstoffatome aufweist und vorzugsweise 1-Hexen ist.

6. Zusammensetzung gemäß einem der vorstehenden Ansprüche, die ein auf Isobutylen basierendes flüssiges Copolymer enthält, wobei das auf Isobutylen basierende flüssige Copolymer 10 bis 90 Gew.% von (b) umfasst.

7. Zusammensetzung gemäß Anspruch 6, in der das auf Isobutylen basierende flüssige Copolymer ein Isobutylen-1-Buten-Copolymer mit einem Molekulargewicht von 900 bis 1.000 ist.

8. Zusammensetzung gemäß einem der Ansprüche 6 oder 7, die 10 bis 40 Gew.% des auf Isobutylen basierenden flüssigen Copolymers umfasst.

9. Zusammensetzung gemäß einem der vorstehenden Ansprüche, die außerdem ein Wachs mit einer Tₘ von mindestens 40°C umfasst.

10. Zusammensetzung gemäß einem der vorstehenden Ansprüche, bei der das α-Olefincomonomer, das 30 bis 70 Gew.% der Klebrigmacherkomponente (b) umfasst, 4 bis 8 Kohlenstoffatome aufweist, wobei die Komponente (b) festen Klebrigmacher, ausgewählt aus aliphatischen Harzen, Polyterpenharzen, hydrierten cyclischen Harzen und gemischten aliphatisch-aromatischen Harzen mit einem Erweichungspunkt im Bereich von 70 bis 130 °C umfasst, sowie 10 bis 90 Gew.% eines flüssigen Isobutylen-1-Buten-Copolymers mit einem Molekulargewicht von 900 bis 1.000.

11. Zusammensetzung gemäß einem der vorstehenden Ansprüche, bei der das Ethylencopolymer eine Molekulargewichtsverteilung M_{w}/Mₙ von weniger als 3 hat.

12. Laminierte Struktur, die einen Träger und eine gegebenenfalls unpolare Oberflächenschicht umfasst, die mittels einer Zusammensetzung gemäß einem der vorstehenden Ansprüche auf die laminierte Struktur geklebt ist.

13. Zusammensetzung gemäß Anspruch 1, bei der das α-Olefincomonomer 6 bis 20 Kohlenstoffatome aufweist.

## Revendications

1. Composition d'adhésif thermofusible comprenant un composant copolymère (a) et un composant collant (b) dans laquelle:
(a) comprend un copolymère d'éthylène et de 6 à 30 pour cent en poids (par rapport au poids d'éthylène et de comonomère) d'un comonomère alpha-oléfinique ayant de 4 à 40 atomes de carbone, lequel copolymère présente un poids moléculaire moyen en poids (Mw) de 2000 à 100 000, et où le copolymère d'éthylène est le produit polymère formé par copolymérisation d'éthylène et de l'alpha-oléfine en présence d'un catalyseur métallocène et d'un co-catalyseur; et
(b) comprend un agent collant choisi parmi des résines aliphatiques, des résines polyterpéniques, des résines cycliques hydrogénées et des résines aliphatiques/aromatiques mixtes avec une gamme de point de ramollissement de 70-130°C, et comprend éventuellement un copolymère liquide à base d'isobutylène.

2. Composition selon la revendication 1, dans laquelle (b) comprend de 30 à 70% en poids de la composition d'adhésif.

3. Composition selon la revendication 1 ou 2, dans laquelle le copolymère d'éthylène présente un Mw de 30 000 à 80 000.

4. Composition selon la revendication 1, 2 ou 3, dans laquelle le copolymère d'éthylène comprend de 10 à 20 pour cent en poids de comonomère.

5. Composition selon l'une quelconque des revendications précédentes, dans laquelle l'alpha-oléfine renferme de 4 à 8 atomes de carbone, et est de préférence l'hexène-1.

6. Composition selon l'une quelconque des revendications précédentes ci-dessus contenant un copolymère liquide à base d'isobutylène, dans laquelle le copolymère liquide à base d'isobutylène comprend de 10 à 90% en poids de (b).

7. Composition selon la revendication 6, dans laquelle le copolymère liquide à base d'isobutylène est un copolymère d'isobutylène/butène-1 ayant un poids moléculaire de 900 à 1000.

8. Composition selon les revendications 6 ou 7, comprenant de 10 à 40% en poids du copolymère liquide à base d'isobutylène.

9. Composition selon l'une quelconque des revendications précédentes, comprenant en outre de la cire ayant une Tm d'au moins 40°C.

10. Composition selon l'une quelconque des revendications précédentes, dans laquelle le comonomère alpha-oléfinique renferme de 4 à 8 atomes de carbone, et comprenant de 30 à 70% en poids de composant collant (b), ledit composant (b) comprenant un agent collant solide choisi parmi des résines aliphatiques, des résines polyterpéniques, des résines cycliques hydrogénées et des résines aliphatiques/aromatiques mixtes avec une gamme de point de ramollissement de 70 à 130°C, et de 10 à 90% en poids d'un copolymère liquide d'isobutylène/butène-1 ayant un poids moléculaire de 900 à 1000.

11. Composition selon l'une quelconque des revendications précédentes, dans laquelle le copolymère d'éthylène présente une distribution de poids moléculaire Mw/Mn inférieure à 3.

12. Structure stratifiée comprenant un substrat et une couche superficielle éventuellement nonpolaire adhérant à celui-ci au moyen d'une composition selon l'une quelconque des revendications précédentes.

13. Composition selon la revendication 1, dans laquelle le comonomère alpha-oléfinique renferme de 6 à 20 atomes de carbone.
